# EUROPEAN PATENT APPLICATION

(11) **EP 1 898 585 A1**
(43) Date of publication of application: **12.03.2008**
(21) Application number: 06018874.5
(22) Date of filing: 08.09.2006
(51) Int. Cl.: H04L 29/06

(54) **Optimized subscription to registration state information in the IMS**

(71) Applicant: Nokia Siemens Networks GmbH & Co. KG, 81541 München (DE)
(72) Inventor: Leis, Peter, 82377 Penzberg (DE)

(57) **Abstract**

Establishing one subscription between AS and S-CSCF used to deliver the registration status of all subscribers registered at this S-CSC7. Registrations are received by the S-CSCF from UE_1 and UE_2. An AS is subscribed to an optimized "Reg-Event". The S-CSF sends a NOTIFY message with registration info of all UE's.

## Description

### Background

In the 3GPP standard, SIP based IM core network subsystem (IMS) users or parties register themselves with their parties using a so-called SIP REGISTER message in the network and signals its readiness for communication. This SIP REGISTER message is worked on and terminated in the network in a Serving call session control Function (S-CSCF). The S-CSCF implements for this the role of a so-called SIP Register (see RFC 3261). The S-CSCF existing Registration-Information of the parties will also be needed by other Nodes in order to provide corresponding services.

An example, an Applications-Server attached to the S-CSCF realises e.g. a call the Diversion service. For this Service the application server needs among other things the information about the registration status of the parties.

In the IMS this Registration Information will usually be communicated with mechanisms, which are based on the subscription to "Registration Event" between different nodes. These mechanisms are described in the specifications IETF RFC 3265, IETF RFC 3680 and 3GPP TS24.229.

The following problem results from the above. For the mechanism specified above the Application Server for each party subscribes itself to the Registration-Status of a subscriber, in which it is interested in, with the S-CSCF. Through this subscription between the application server and the S-CSCF for each party a Dialog is developed. For each Dialog both the Application Server and the S-CSCF must maintain a Dialog-State. This Application State comprises among other things also Timers.
In case a S-CSCF, which has high traffic load (= many registered parties, several Application Servers subscribed to the Registration-Status of these parties), this results in additional load (timer processing, transaction processing) on the interface S-CSC7.

In case the Application-Server, which functions as a voice server and serves many parties that generates a high additional load for the Application Server.

A goal of the present invention is it to define a mechanism with which the Application Server can query the Registration Information of subscribers from the S-CSCF in an optimized way.

That is, that this mechanism is to get along with as few resources as possible both in the Application Server and the S-CSCF should use if possible a minimum of State information as needed.

That means that information exchange is to be made over a single Dialog. In addition it should be possible to optimize the respective mechanism, assuring the least possible exchange of SIP messages between Application Server and S-CSCF.

An optimization for the subscription on "Reg-Event" is not heretofore defined. In other words, the problem has not been solved.

### Summary & Objects Of The Invention

Until now, an AS interested in the registration state of subscribers, creates subscriptions at the S-CSCF, one per subscriber. The invention proposes, that only one subscription between AS and S-CSCF is established, and this subscription is used to deliver the registration status of all subscribers.

This is accomplished by a new communication model. The new model is based on a AS - SCSCF relation/subscription. Having only this one dialog/subscription allows for a simple resource saving communication between AS and S-CSCF

### Brief Description Of The Drawings

Figure 1 shows the subscription to reg-event of the invention,
Figure 2 shows a first example of the optimized subscription to reg-event of the invention, and
Figure 3 shows a second example of the optimized subscription to reg-event of the invention.

### Detailed Description

So far this subscription always runs for each party as follows. In IMS for the transport of the Registration Status of a party the so-called Subscription on "Reg-Event" is used.

At this time the S-CSCF sends the SIP based trigger for a successfully registered party to the interested Application Server. This trigger indicates that a participant registered itself, it contains however no detailed information of the Registration Status of the party. This detailed information covers all identities this participant may use and their current status. Usually a participant in IMS possesses more than one identity, e.g. at least a SIP URI and a Tel URI.

In order that these detailed data are received, the application server for each party sends an SIP SUBSCRIBE message to the S-CSCF and creates the appropriate Dialog.

Within the Dialog the Registration Information, the same that is available in the S-CSCF for a registered participant, is sent to the Application Server. For this a SIP NOTIFY message is used. This SIP NOTIFY message transports a so-called Message Body that is XML coded and whose XML pattern is defined by RFC 3680. This XML coded Message Body contains the actual registration information of the party.

The invention proposes, that only one subscription between AS and S-CSCF is established, and this subscription is used to deliver the registration status of all subscribers.

The communication model between a S-CSCF and an Application Server will be simplified, the communication relationship is only a one to one per S-CSCF/AS instead of one communication relation per subscriber that is offered a service on an AS. This allows for a simple and resource saving handling of the communication between the S-CSCF and AS in order to communicate the registration status to an AS.

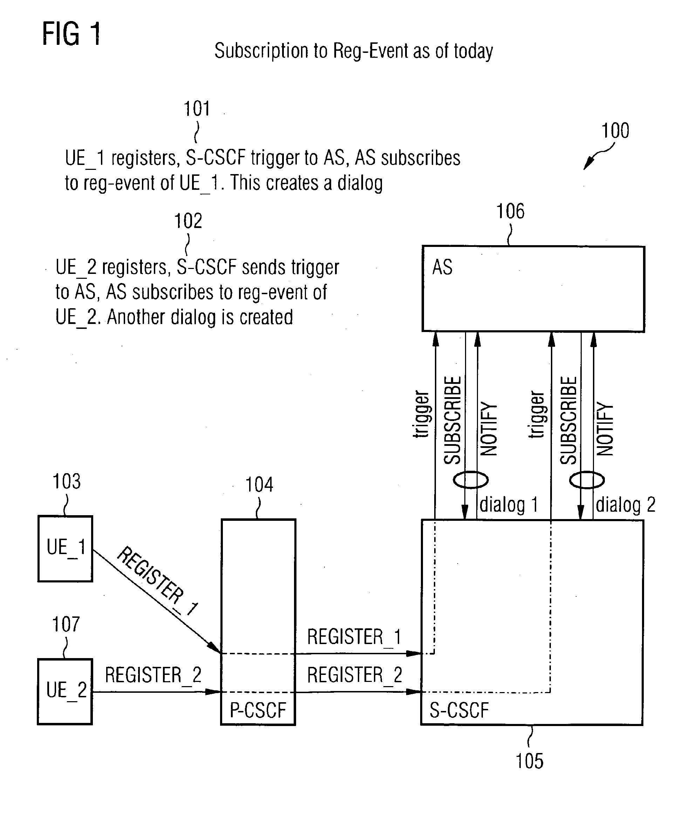

A known subscription 100 process is represented in Figure 1. In step 101, the UE_1 103 registers, via the P-CSCF 104. The S-CSCF 105 in turn issues a trigger to the AS 106. In response, the AS subscribes to reg-event of UE_1. This creates a dialog 1.

In step 102. UE_2 107 registers, via the P-CSCF 104. The S-CSCF 105 sends trigger to the AS 106. The AS subscribes a Reg-Event of UE_2 107. This creates another dialog 2.

The available invention message suggests that the application server subscribes itself while the raising with all S-CSCF'n on "Reg-Event", relevant for it, according to the optimized method (in the following optimized "reg-event" mentioned). In this optimized method for data exchange between S-CSCF and Application Server only one Dialog is only needed. The information, with which S-CSCF'n the application server can subscribe itself, can be attained as follows:
- manually administered list
- automatons over the so called Sh interface (described in 3GPP TS 23,218).

The kind of the mechanism is not relevant for the applicability of the invention message and is, therefore, not described in more detail.

For an optimized subscription to "Reg-Event" the application server sends a SIP SUBSCRIBE message with the following control information:
Request URI: set SIP ADDR of the S-CSCF
To: set SIP ADDR of the S-CSCF
From: set SIP ADDR of application servers
Event: Reg
Accept: application/reginfo/XML, optimized (New)

By the new parameter "optimized" (in the Accept header) in the SIP SUBSCRIBE message, the Application Server indicates that it is interested in the Registration-Information of all subscribers registered in the S-CSCF and relevant for the AS. The determination, which subscription is relevant for the application server, is based in the S-CSCF on basic mechanisms, i.e., "Initial Filter Criteria", defined in 3GPP TS 23.218.

With the SIP SUBSCRIBE message with optimized "Reg-Event" indication, a subscription is created both in the application server and in the S-CSCF with only one Dialog. Within this Dialog now the registration status of all relevant participants to the application server is sent by an SIP NOTIFY message. For the monitoring of the Dialog both in the S-CSCF and in the Application Server only one timer is needed on each side. The value of the timer is agreed upon in the "Expires" header between the two nodes involved.

Additionally the Application Server shall indicate in the SIP SUBSCRIBE message that it supports a "content type", that allows matching objects for representations that are related are represented within bodies. That means, if more than one registration information is already present (i.e. the information of at least two participants has changed), this information is sent in one body in a SIP NOTIFY message can be sent upward.

For this one can use a so-called "Multipart/Related" type. This is already defined. This is particularly helpful for cases where traffic is on the S-CSCF, and the application server is taken into operation again, e.g., after temporarily being not available. Thus the number of SIP messages exchanged between S-CSCF and application server can be clearly reduced for these cases.

This proposal advantageously results from the technical characteristics according to invention indicated above.
1. In the instant proposal, the Communication model between S-CSCF and application server is greatly simplified. It generates only one communication relation for notification about registration status of participants from the S-CSCF.
2. The operational sequence described here makes possible simple paper of communication between S-CSCF, since only one Dialog between the nodes involved is needed, over which the registration status of subscribers can be exchanged.

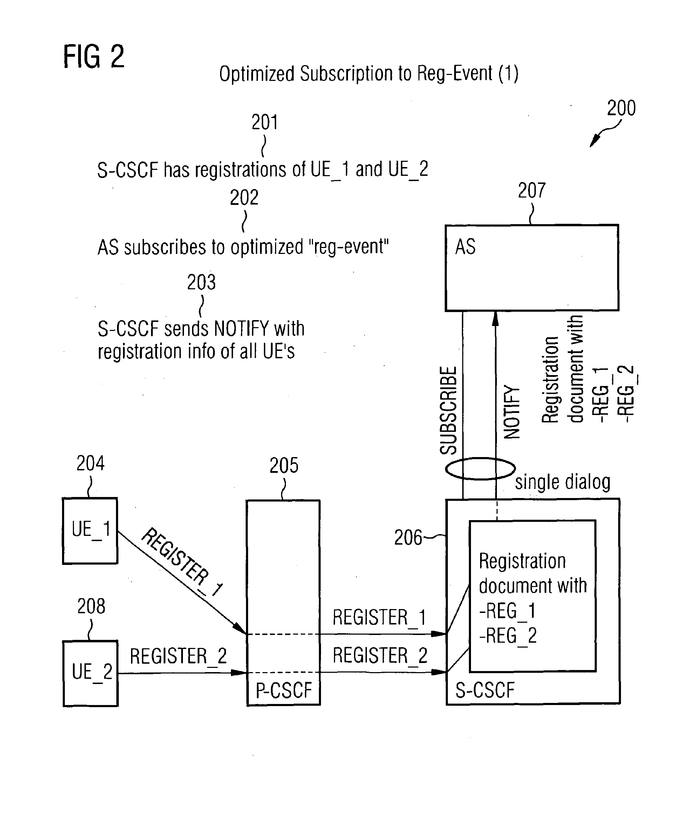

Now with reference to Figure 2, a first example will be discussed.

In the example "Optimized subscription to Reg-Event (1)" 200 (Figure 2) it is described how an application server subscribes to an optimized "Reg-Event" package and a Dialog between S-CSCF and AS is established. With this S-CSCF already 2 participants (UE_1 and UE_2) are registered.

In step 201. S-CSCF 206 receives registrations from UE_1 204 and UE_2 208 via P-CSCF 205.

In step 202. the AS 207 subsribes an optimized "Reg-Event"

In step 203. the S-CSCF 206 sends a NOTIFY with registration info of all UE's 204, 208.

Within this Dialog the S-CSCF announces all registration information of the two registered participants relevant for the application server. Within this Dialog, also, changes of the data will be announced to the application server to the S-CSCF. Around the size of the SIP NOTIFY message when changes to limit appropriate, already existing, mechanisms (partial notification) can be used. These mechanisms are already defined in the IETF.

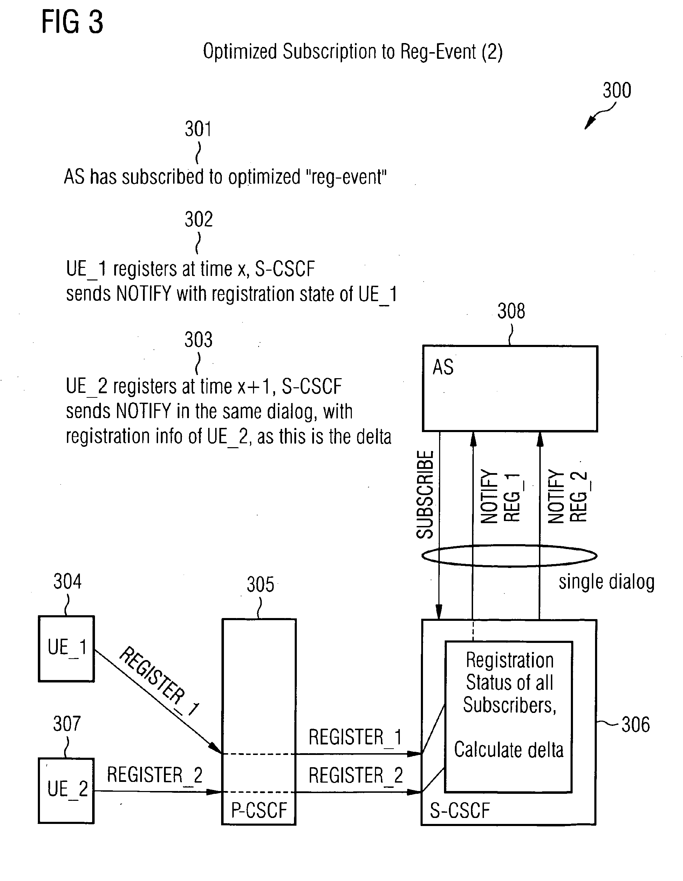

2. In a second example "Optimized subscription ton Reg-Event (2)" 300(Figure 3) is represented, how an application server subscribes an optimized "Reg-Event" package and the S-CSCF has no registered participants at this time still. In this case, first only the Dialog is created.

In step 301, the 308 AS has subscribed to optimized "Reg-Event".

In step 302, UE_1 304 registers at time x, with the S-CSCF 306 (via P-CSCF 305) sends a NOTIFY with registration state of the UE_1 304.

In step 303, UE_2 306 registers at time x+1, and the S-CSCF 306 sends a NOTIFY in the same Dialog, with registration info of the UE_2 307, as this is the Delta information.

Now if a participant registers itself, then this information with the appropriate SIP NOTIFY MESSAGE (REG_1) is sent to the application server (AS). If a further participant is added, then only the Delta Information is announced to the preceding SIP NOTIFY MESSAGE (REG_2) over the Dialog already existing to the application server.

## Claims

1. A method for establishing one subscription between AS and S-CSCF used to deliver the registration status of all subscribers, comprising the steps of:
receiving by the S-CSCF registrations from UE_1 and UE_2, ... UE_n
an AS subscribing to optimized "Reg-Event", and
sending by the S-CSCF a NOTIFY message with registration info of all UE's.

2. The method of claim 1, further comprising the step of registering UE_1 at time x, with the S-CSCF 306 .

3. The method of claim 2, further comprising the step of sending a NOTIFY message registration state of the UE_1.

4. The method of claim 3, further comprising the step of registering UE_2 at time x+1, and sending by the S-CSCF a NOTIFY message in the same Dialog, with registration info of UE_2.
